(19) Europäisches Patentamt
European Patent Office
Office européen des brevets

(11) Veröffentlichungsnummer: **0 441 135 B1**

# (12) EUROPÄISCHE PATENTSCHRIFT

(45) Veröffentlichungstag der Patentschrift: **05.10.94**

(51) Int. Cl.5: **C08G 18/20**, C08K 3/32, C08K 9/08, C08G 18/38, C08G 18/54

(21) Anmeldenummer: **91100451.3**

(22) Anmeldetag: **16.01.91**

## (54) Selbstverlöschende Polyurethane.

(30) Priorität: **03.02.90 DE 4003230**

(43) Veröffentlichungstag der Anmeldung:
**14.08.91 Patentblatt 91/33**

(45) Bekanntmachung des Hinweises auf die Patenterteilung:
**05.10.94 Patentblatt 94/40**

(84) Benannte Vertragsstaaten:
**BE DE FR GB IT LU NL**

(56) Entgegenhaltungen:
**EP-A- 0 088 950**
**EP-A- 0 115 871**
**EP-A- 0 131 097**
**EP-A- 0 180 795**
**EP-A- 0 258 685**
**WO-A-89/01011**
**DE-A- 3 801 456**

(73) Patentinhaber: **HOECHST AKTIENGESELLSCHAFT**

**D-65926 Frankfurt (DE)**

(72) Erfinder: **Eberspach, Werner, Dr.**
**Heimchenweg 84**
**W-6230 Frankfurt/Main 80 (DE)**

EP 0 441 135 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft selbstverlöschende Polyurethane, welche durch stufenweise Polyaddition von Diisocyanaten oder Polyisocyanaten an Polyole unter Zusatz eines aus einer Phosphorkomponente und einer Stickstoffkomponente als Synergisten bestehenden Flammschutzmittels erhältlich sind.

Es ist bekannt, wasserunlösliche Ammoniumpolyphosphate der allgemeinen Formel

$$H_{(n-m)+2}(NH_4)_mP_nO_{3n+1}$$

wobei n eine ganze Zahl zwischen 10 und 800 ist und das Verhältnis $\frac{m}{n}$ ungefähr 1 beträgt, zur flammfesten Ausrüstung von Polyurethanen zu verwenden. Dabei können die einzelnen Ammoniumpolyphosphatteilchen in ein wasserunlösliches Polykondensationsprodukt aus Melamin und Formaldehyd eingekapselt sein (vergl. US-A-4 467 056).

Das Intumeszenz-Flammschutzsystem zur flammwidrigen Ausrüstung polymerer Massen, insbesondere Polypropylen, nach der DE-A-37 20 094 besteht im wesentlichen aus einer Mischung aus Ammoniumpolyphosphat und Tris-(2-hydroxyethyl)-isocyanurat. Verwendet man anstelle von Tris-(2-hydroxyethyl)-isocyanurat ein ausgehärtetes Melamin/Formaldehyd-Harz, so ist das Resultat der Brandprüfung des so ausgerüsteten Polypropylens unbefriedigend.

Weiterhin ist aus der GB-A-2 094 315 bekannt, Polyurethan-Hartschaum mit einem im wesentlichen aus Ammoniumpolyphosphat, Melamin und Stärke bestehenden Flammschutzmittel flammhemmend auszurüsten.

Schließlich enthalten flammwidrig ausgerüstete Polyurethane nach der DE-A-38 01 456, welche durch Umsetzung von organischen Polyisocyanaten mit Polyolen erhalten wurden, als Flammschutzmittel ein Phenol- oder Melamin-Formaldehyd-Kondensat, ein Kohlehydrat oder einen mehrwertigen Alkohol, ein Ammoniumphosphat und gegebenenfalls eine wärmezersetzliche organische Stickstoffverbindung.

Es wurde nun überraschend gefunden, daß die flammwidrige Ausrüstung von Polyurethanen, insbesondere von Polyurethan-Schaumstoffen, merklich verbessert werden kann, wenn man als Flammschutzmittel eine Kombination aus Ammoniumpolyphosphat und einer synergistisch wirkenden kohlenstoffhaltigen Stickstoffverbindung einsetzt.

Im einzelnen betrifft die vorliegende Erfindung daher selbstverlöschende Polyurethane, die durch stufenweise Polyaddition von Diisocyanaten oder Polyisocyanaten an Polyole unter Zusatz eines Flammschutzmittels erhalten wurden, wobei das Flammschutzmittel aus in Wasser schwerlöslichem Ammoniumpolyphosphat und aus mindestens einem Bis-triazinylpiperazin als synergistisch wirkender organischer Stickstoffkomponente besteht.

Die erfindungsgemäßen selbstverlöschenden Polyurethane können wahlweise auch noch dadurch weitergebildet sein, daß

a) als Bis-triazinylpiperazine N,N'-Bis-1,3,5-triazin-6-yl-piperazine verwendet sind;

b) 6 bis 10 Teile Bis-triazinylpiperazine sowie insgesamt 18 bis 35 Teile Ammoniumpolyphosphat und Bis-triazinylpiperazine je 100 Teile Polyol verwendet sind und daß das Mischungsverhältnis Ammoniumpolyphosphat zu Bis-triazinylpiperazin in Gewichtsteilen (1,3 bis 2,5) : 1 beträgt.

Die bei der Herstellung der selbstverlöschenden Polyurethane gemäß der Erfindung verwendeten Bis-triazinylpiperazine der allgemeinen Formel

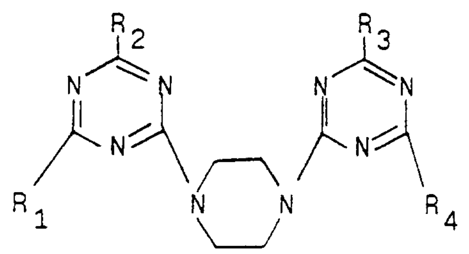

worin $R_1$, $R_2$, $R_3$ und $R_4$ gleich oder verwchieden sein können und unabhängig voneinander einen Chlor-, Hydroxyl-, Alkoxy-, Aryloxy-, Alkylamino-, Dialkylamino-, Morpholino-, Arylamino- oder diarylamino-Substituenten darstellen können, können dadurch erhalten werden, daß man in einer ersten Reaktionsstufe Cyanurhalogenid, Piperazin sowie eine einwertige anorganische Base im Molverhältnis 1 : (0,5 bis 0,6) : (1 bis 1,2) in Gegenwart von Wasser und einem weiteren Suspensionsmittel bei Temperaturen von minus 20

°C bis 0 °C und bei einem pH-Wert von 5 bis 7 umsetzt und das als Zwischenprodukt erhaltene N,N'-Bis-(2,4-dichlor-1,3,5-triazin-6-yl)piperazin abfiltriert und mit Wasser wäscht. In den Fällen, in denen $R_1$, $R_2$, $R_3$ und $R_4$ ungleich Chlor sind, wird das genannte Zwischenprodukt in einer zweiten Reaktionsstufe mit einer einwertigen anorganischen Base und einer Verbindung XH oder YH, wobei X und Y gleich oder verschieden und beispielsweise Methoxy, Ethoxy oder Morpholino sein können, im Molverhältnis (2 bis 2,2) : (2 bis 2,2) je Mol in die erste Reaktionsstufe eingesetztes Cyanurhalogenid in Gegenwart eines Suspensionsmittels gemischt, 12 bis 20 Stunden unter Rückfluß erhitzt, abgekühlt, neutralisiert und das Zielprodukt abfiltriert.

Bei der Herstellung der selbstverlöschenden Polyurethane gemäß der Erfindung können entweder beispielsweise nach der EP-A-88 950 erhaltene Ammoniumpolyphosphate gemäß der Formel $(NH_4PO_3)_n$ mit einer Kettenlänge n von etwa 700, einem Phosphatgehalt von 31,5 ± 0,5 Gewichts%, einem Stickstoffgehalt von 14,5 ± 0,5 Gewichts% sowie mit weniger als 10 % wasserlöslichen Anteilen - gemessen in 10 %iger wäßriger Suspension bei 25 °C - oder beispielsweise nach der EP-A-180 795 erhaltene Ammoniumpolyphosphate gemäß der Formel $(NH_4PO_3)_n$ mit einer Kettenlänge n von etwa 700, welche mit Melamin/Formaldehyd-Harz mikroverkapselt sind, sowie mit einem Phosphorgehalt von 29,0 ± 1 %, einem Stickstoffgehalt von 16,5 ± 1 % und mit weniger als 0,3 % wasserlöslichen Anteilen - gemessen in 10 %iger wäßriger Suspension bei 25 °C - verwendet werden.

Die bei den erfindungsgemäßen selbstverlöschenden Polyurethanen verwendeten kohlenstoffhaltigen Stickstoffverbindungen bringen in Kombination mit Ammoniumpolyphosphat eine wesentliche Verbesserung der Flammwidrigkeit der Polyurethane mit sich.

Die Erfindung wird durch die folgenden Beispiele näher erläutert.

Beispiel 1 (Vergleichsbeispiel)

Nach folgender Rezeptur wurde ein Polyester-Polyurethan-Weichschaum hergestellt:

500 g ®Desmophen 2200 (Bayer AG, Leverkusen) - es handelt sich um ein Polyol auf der Basis von Adipinsäure, Diethylenglykol und einem Triol mit einer OH-Zahl von 60 ± 3 mg KOH/g -

17,5 g Wasser

7,5 g ®Desmorapid DB (Bayer AG Leverkusen)
- es handelt sich um einen Amin-Katalysator -

5,0 g ®Polyurax SE 232 (BP Chemical Ltd.)
- es handelt sich um einen Organosilikon-Schaum-stabilisator -

75 g ®Exolit 422 (Hoechst AG, Frankfurt/Main)
- es handelt sich um ein feinkörniges, in Wasser schwerlösliches Ammoniumpolyphosphat der Formel $(NH_4PO_3)_n$, wobei n 700 ist -

25 g 1,4-Bis[2,4-dimethoxy-1,3,5-triazin-6-yl]piperazin 1,4-Bis[2,4-dimethoxy-1,3,5-triazin-6-yl] piperazin wurde aus Cyanurchlorid, Piperazin und Methanol nach dem Verfahren gemäß der EP-A-413 999 hergestellt.

Der so erhaltene Polyurethan-Schaum hatte ein Raumgewicht von 38 kg/m$^3$, die Steigzeit betrug 130 s.

Zur Ermittlung der Flammwidrigkeit des Schaumstoffes wurde der Sauerstoffindex (LOI) gemäß ASTMD-2863-74 bestimmt und eine Brandprüfung durch Kantenbeflammung gemäß DIN 4102, Teil 1, Abschnit 6.2 (Mai 1981) durchgeführt.

Die Ergebnisse der Brandprüfungen sind in Tabelle 1 aufgeführt.

Beispiel 2 (Vergleichsbeispiel)

Es wurde analog Beispiel 1 gearbeitet, wobei jedoch als Flammschutzmittel 75 g ®Exolit 462 und 25 g 1,4-Bis[2,4-dimorpholino-1,3,5-triazin-6-yl]piperazin eingesetzt wurden.

Die Ergebnisse der Brandprüfung sind in Tabelle 1 aufgeführt.

Beispiel 3 (gemäß der Erfindung)

Es wurde analog Beispiel 1 gearbeitet, wobei jedoch als Flammschutzmittel 60 g ®Exolit 462 und 40 g 1,4-Bis[2,4-dimethoxy-1,3,5-triazin-6-yl]piperazin eingesetzt wurden.

Die Ergebnisse der Brandprüfung sind in Tabelle 2 aufgeführt.

Beispiel 4 (gemäß der Erfindung)

Es wurde analog Beispiel 1 gearbeitet, wobei jedoch als Flammschutzmittel 60 g ®Exolit 462 und 40 g 1,4-Bis[2,4-diethoxy-1,3,5-triazin-6-yl]piperazin eingesetzt wurden.

Die Ergebnisse der Brandprüfung sind in Tabelle 2 aufgeführt.

Beispiel 5 (gemäß der Erfindung)

Es wurde analog Beispiel 1 gearbeitet, wobei jedoch als Flammschutzmittel 60 g ®Exolit 462 und 40 g 1,4-Bis[2,4-dimorpholino-1,3,5-triazin-6-yl]piperazin eingesetzt wurden.

Die Ergebnisse der Brandprüfung sind in Tabelle 2 aufgeführt.

TABELLE 1

Ausprüfung von Polyurethanweichschäumen

| Beispiel | Flammschutzsystem Art | Flammschutzsystem Menge ... Teile/100 Teile Polyol | Raumgewicht (kg/m³) | Sauerstoffindex 1) | DIN 4102 2) durchschnittliche Flammenhöhe (mm) | DIN 4102 2) Klasse |
|---|---|---|---|---|---|---|
| 1 (Vergleich) | ®Exolit 422<br>1,4-Bis[2,4-dimethoxy-1,3,5-triazin-6-yl]piperazin | 15<br>5 | 38,5 | 0,24 | 170 | n.k. 3) |
| 2 (Vergleich) | ®Exolit 462<br>1,4-Bis[2,4-dimorpholino-1,3,5-triazin-6-yl]piperazin | 15<br>5 | 38 | 0,23 | 160 | n.k. 3) |

1) Sauerstoffindex gemäß ASTM-D 2863-74
2) Brandprüfung gemäß DIN 4102, Teil 1 (Kantenbeflammung)
3) n.k. = nicht klassifiziert

TABELLE 2

Ausprüfung von Polyurethanweichschäumen

| Beispiel | Flammschutzsystem Art | Flammschutzsystem Menge ... Teile/100 Teile Polyol | Raumgewicht (kg/m³) | Sauerstoffindex 1) | DIN 4102 2) durchschnittliche Flammenhöhe (mm) | DIN 4102 2) Klasse |
|---|---|---|---|---|---|---|
| 3 (erfindungsgemäß) | ®Exolit 462<br>1,4-Bis[2,4-dimethoxy-1,3,5-triazin-6-yl]piperazin | 12<br>8 | 39 | 0,24 | 145 | B2 |
| 4 (erfindungsgemäß) | ®Exolit 462<br>1,4-Bis[2,4-diethoxy-1,3,5-triazin-6-yl]piperazin | 12<br>8 | 39 | 0,24 | 140 | B2 |
| 5 (erfindungsgemäß) | ®Exolit 462<br>1,4-Bis[2,4-dimorpholino-1,3,5-triazin-6-yl]piperazin | 12<br>8 | 38 | 0,24 | 140 | B2 |

1) Sauerstoffindex gemäß ASTM-D 2863-74
2) Brandprüfung gemäß DIN 4102, Teil 1 (Kantenbeflammung)

## Patentansprüche

1. Selbstverlöschende Polyurethane, erhalten durch stufenweise Polyaddition von Diisocyanaten oder Polyisocyanaten an Polyole unter Zusatz eines aus einer Phosphorkomponente und einer Stickstoffkomponente als Synergisten bestehenden Flammschutzmittels, wobei die Phosphorkomponente ein in Wasser schwerlösliches Ammoniumpolyphosphat ist, während die organische Stickstoffkomponente mindestens ein Bis-triazinylpiperazin ist.

2. Selbstverlöschende Polyurethane nach Anspruch 1, dadurch gekennzeichnet, daß als Bis-triazinylpiperazine N,N'-Bis-1,3,5-triazin-6-yl-piperazine verwendet sind.

3. Selbstverlöschende Polyurethane nach Anspruch 1 oder 2, dadurch gekennzeichnet, daß 6 bis 10 Teile Bis-triazinylpiperazine sowie insgesamt 18 bis 35 Teile Ammoniumpolyphosphat und Bis-triazinylpiperazine je 100 Teile Polyol verwendet sind und daß das Mischungsverhältnis Ammoniumpolyphosphat zu Bis-triazinylpiperazin in Gewichtsteilen (1,3 bis 2,5) : 1 beträgt.

## Claims

1. A self-extinguishing polyurethane obtained by step-wise polyaddition of diisocyanates or polyisocyanates onto polyols in the presence of a flameproofing agent composed of a phosphorus component and a nitrogen component as synergists, the phosphorus component being an ammonium polyphosphate which is sparingly soluble in water and the organic nitrogen component being at least one bis(triazinyl)piperazine.

2. A self-extinguishing polyurethane as claimed in claim 1, wherefor the bis(triazinyl)piperazines used are N,N'-bis(1,3,5-triazin-6-yl)piperazines.

3. A self-extinguishing polyurethane as claimed in claim 1 or 2, wherefor 6 to 10 parts of bis(triazinyl)-piperazines and a total of 18 to 35 parts of ammonium polyphosphate and bis(triazinyl)piperazines have been used per 100 parts of polyol and the mixing ratio of ammonium polyphosphate to bis(triazinyl)-piperazine in parts by weight is (1.3 to 2.5) : 1.

## Revendications

1. Polyuréthannes autoextinguibles, obtenus par polyaddition progressive de diisocyanates ou de polyisocyanates sur des polyols avec addition d'un agent ignifugeant consistant en un composant phosphoré et un composant azoté comme synergistes, le composant phosphoré étant un polyphosphate d'ammonium peu soluble dans l'eau, tandis que le composant azoté organique est au moins une bistriazinylpipérazine.

2. Polyuréthannes autoextinguibles selon la revendication 1, caractérisés en ce que l'on utilise comme bis-triazinylpipérazines des N,N-bis(1,3,5-triazine-6-yl)-pipérazines.

3. Polyuréthannes autoextinguibles selon la revendication 1 ou 2, caractérisés en ce que l'on utilise 6 à 10 parties en poids de bis-triazinylpipérazines et au total 18 à 35 parties en poids de polyphosphate d'ammonium et de bis-triazinylpipérazines pour 100 parties en poids de polyol et en ce que le rapport de mélange du polyphosphate d'ammonium à la bis-triazinylpipérazine est de (1,3 à 2,5) : 1 en parties en poids.